# EUROPÄISCHE PATENTSCHRIFT

(11) **EP 1 341 250 B1**
(45) Veröffentlichungstag und Bekanntmachung des Hinweises auf die Patenterteilung: **11.05.2011**
(21) Anmeldenummer: 02004598.5
(22) Anmeldetag: 28.02.2002
(51) Int. Cl.: H01M 8/10

(54) **Verfahren zur Herstellung von katalysatorbeschichteten Membranen und Membran-Elektrodeneinheiten für Brennstoffzellen**
Process for manufacturing of catalyst coated membranes and membrane electrode units for fuel cells
Procédé de fabrication de membranes revêtues de matière catalytique et des unités à membrane et électrodes pour piles à combustible

(43) Veröffentlichungstag der Anmeldung: 03.09.2003
(73) Patentinhaber: Umicore AG & Co. KG, 63457 Hanau-Wolfgang (DE)
(72) Erfinder: Hohenthanner, Claus-Rupert, Dr., 63457 Hanau (DE); Greinemann, Franz, 63486 Bruchköbel (DE); Seipel, Peter, 63755 Alzenau (DE)
(74) Vertreter: Vossius & Partner

(56) Entgegenhaltungen:
- EP-A- 1 037 295
- EP-A- 1 198 021
- WO-A-97/23916
- WO-A-97/23919
- DE-A- 19 812 592
- US-A- 5 211 984
- PATENT ABSTRACTS OF JAPAN vol. 2000, no. 23, 10. Februar 2001 (2001-02-10) -& JP 2001 160405 A (ASAHI GLASS CO LTD), 12. Juni 2001 (2001-06-12)
- DATABASE CA [Online] CHEMICAL ABSTRACTS SERVICE, COLUMBUS, OHIO, US; KANEKO, MINORU ET AL: "Manufacture of electrode/ion exchanger and electrode/ion exchanger/electrode laminates" retrieved from STN Database accession no. 123:174986 CA XP002210748 -& JP 07 176317 A (SANYO ELECTRIC CO, JAPAN) 14. Juli 1995 (1995-07-14) & PATENT ABSTRACTS OF JAPAN vol. 1995, no. 10, 30. November 1995 (1995-11-30) & JP 07 176317 A (SANYO ELECTRIC CO LTD), 14. Juli 1995 (1995-07-14)

## Beschreibung

Die Erfindung betrifft ein Verfahren zur Herstellung von katalysatorbeschichteten Membranen (engl. catalyst coated membrane, CCM) für PEM-Brennstoffzellen, welches sich insbesondere für die kontinuierliche Fertigung eignet. Weiterhin umfaßt die Erfindung die Verwendung dieser katalysatorbeschichteten Membranen zur Herstellung von Membran-Elektrodeneinheiten (MEEs).

Brennstoffzellen wandeln einen Brennstoff und ein Oxidationsmittel örtlich voneinander getrennt an zwei Elektroden in Strom, Wärme und Wasser um. Als Brennstoff kann Wasserstoff, Methanol oder ein wasserstoffreiches Gas, als Oxidationsmittel Sauerstoff oder Luft dienen. Der Vorgang der Energieumwandlung in der Brennstoffzelle zeichnet sich durch eine große Schadstofffreiheit und einen besonders hohen Wirkungsgrad aus. Aus diesem Grunde gewinnen Brennstoffzellen zunehmend Bedeutung für alternative Antriebskonzepte, Hausenergieversorgungsanlagen sowie portable Anwendungen.

Die Membranbrennstoffzellen, beispielsweise die Polymerelektrolyt-Brennstoffzelle (englisch: PEMFC) und die Direkt-Methanol-Brennstoffzelle (englisch: DMFC) eignen sich aufgrund ihrer niedrigen Betriebstemperatur, ihrer kompakten Bauweise und ihrer Leistungsdichte für viele mobile und stationäre Einsatzbereiche.

PEM-Brennstoffzellen sind in einer stapelweisen Anordnung ("Stack") aus vielen Brennstoffzelleneinheiten aufgebaut. Diese sind zur Erhöhung der Betriebsspannung elektrisch in Reihe geschaltet. Eine Brennstoffzelleneinheit enthält jeweils eine 5-lagige Membran-Elektrodeneinheit (MEE), die zwischen bipolaren Platten, auch als Separatorplatten bezeichnet, zur Gaszufuhr und Stromleitung angeordnet ist. Eine solche 5-lagige Membran-Elektrodeneinheit ist wiederum aus einer Polymerelektrolyt-Membran aufgebaut, welche auf beiden Seiten mit jeweils einer Elektrodenschicht versehen ist (3-lagige, katalysatorbeschichtete Membran, engl. catalyst coated membrane, CCM). Auf den beiden Seiten der CCM werden dann sogenannte Gasverteilerschichten (engl. gas diffusion layers, GDLs oder "backings") angebracht, so daß man damit zur 5-lagigen Membran-Elektrodeneinheit gelangt.

Eine der Elektrodenschichten ist als Anode für die Oxidation von Wasserstoff und die zweite Elektrodenschicht als Kathode für die Reduktion von Sauerstoff ausgebildet. Die Gasverteilerschichten bestehen gewöhnlich aus Kohlefaserpapier oder Kohlefasergewebe und ermöglichen einen guten Zugang der Reaktionsgase zu den Reaktionsschichten und eine gute Ableitung des Zellenstroms und des sich bildenden Wassers.

Die Elektrodenschichten für Anode und Kathode enthalten ein Protonen leitendes Polymer und Elektrokatalysatoren, welche die jeweilige Reaktion (Oxidation von Wasserstoff beziehungsweise Reduktion von Sauerstoff) katalytisch unterstützen. Als katalytisch aktive Komponenten werden bevorzugt die Metalle der Platingruppe des Periodensystems der Elemente eingesetzt. In der Mehrzahl verwendet man sogenannte Trägerkatalysatoren, bei denen die katalytisch aktiven Platingruppenmetalle in hochdisperser Form auf die Oberfläche eines leitfähigen Trägermaterials, beispielsweise Ruß, aufgebracht wurden.

Die Polymerelektrolyt-Membran besteht aus Protonen leitenden Polymermaterialien. Diese Materialien werden im folgenden auch kurz als Ionomere bezeichnet. Bevorzugt wird ein Tetrafluorethylen-Fluorvinylether-Copolymer mit Sulfonsäuregruppen verwendet. Dieses Material wird zum Beispiel unter dem Handelsnamen Nafion® von DuPont vertrieben. Es sind jedoch auch andere, insbesondere fluorfreie Ionomermaterialien, wie dotierte sulfonierte Polyetherketone oder dotierte sulfonierte oder sulfinierte Arylketone bzw. Polybenzimidazole einsetzbar. Geeignete Ionomermaterialien sind von O. Savadogo in "Journal of New Materials for Electrochemical Systems" I, 47-66 (1998) beschrieben. Für die Verwendung in Brennstoffzellen benötigen diese Membranen im allgemeinen eine Dicke zwischen 10 und 200 µm.

Zur Herstellung von katalysatorbeschichteten Membranen (3-lagigen CCMs) werden die Elektrodenschichten zumeist unter Verwendung einer pastenförmigen Zubereitung durch Drucken, Rakeln, Rollen oder Sprühen auf die Polymerelektrolyt-Membranen aufgebracht. Die pastenförmigen Zubereitungen sind im folgenden als Tinten oder Katalysatortinten bezeichnet. Sie enthalten neben dem Trägerkatalysator im allgemeinen ein Protonen leitendes Material, verschiedene Lösungsmittel sowie gegebenenfalls feinverteilte hydrophobe Materialien und Porenbildner. Die Katalysatortinten lassen sich nach der Art der verwendeten Lösungsmittel unterscheiden. Es gibt Tinten, die überwiegend organische Lösungsmittel enthalten und solche, die überwiegend Wasser als Lösungsmittel einsetzen. So beschreibt die EP 1 176 652 A2 Katalysatortinten, die ein Gemisch von Wasser und glykolischen Lösungsmitteln enthalten, während die EP 0 731 520 A1 Katalysatortinten beschreibt, bei denen ausschließlich Wasser als Lösungsmittel eingesetzt wird.

Die Gasverteilerschichten (GDLs oder "backings") bestehen gewöhnlich aus grobporigem Kohlefaserpapier oder Kohlefasergewebe mit Porositäten bis zu 90 %. Um das Fluten des Porensystems mit dem an der Kathode entstehenden Reaktionswasser zu verhindern, werden diese Materialien mit hydrophoben Materialien imprägniert, zum Beispiel mit Dispersionen von Polytetrafluorethylen (PTFE). Zur Verbesserung des elektrischen Kontaktes zwischen den Elektrodenschichten und den Gasverteilerschichten beschichtet man diese häufig auf der Seite, die der jeweiligen Elektrodenschicht zugewandt ist, mit einer sogenannten Ausgleichsschicht aus Ruß und einem Fluorpolymer ("Microlayer"). Außerdem können die Gasverteilerschichten (GDLs) noch zusätzlich mit einer Schicht von Elektrokatalysator versehen sein; man spricht dann von sogenannten "katalysierten" GDLs). In allen Fällen gelangt man, wie zuvor schon beschrieben, durch Anbringen von zwei GDLs auf beiden Seiten einer CCM zu einer 5-lagigen Membran-Elektrodeneinheit.

Die Kommerzialisierung der PEM-Brennstoffzellentechnologie erfordert großtechnische Produktionsverfahren für katalysatorbeschichtete Membranen (CCMs) sowie Membran-Elektrodeneinheiten, damit diese in hoher Stückzahl für mobile, stationäre und portable Anwendungen verfügbar sind.

In der US 5,211,984 wird die Beschichtung der Polymerelektrolyt-Membran mit Hilfe des Transferverfahrens beschrieben, wobei Membranen verwendet werden, die in ionenausgetauschter Form (z.B. Na⁺-Form) vorliegen. Man erhält dünne Katalysatorschichten, die eine Schichtdicke von weniger als 10 µm aufweisen. Das Verfahren umfaßt viele Prozeßschritte, ist umständlich, teuer und damit nur für kleine Serien geeignet.

In der DE 195 09 749 wird ein Beschichtungsverfahren zur kontinuierlichen Herstellung eines Verbundes aus Elektrodenmaterial, Katalysatormaterial und einer lonomermembran beschrieben, wobei aus einem das Elektrodenmaterial, das Katalysatormaterial und das Ionomermaterial umfassenden katalytischen Pulver eine Elektrodenschicht auf einem Träger hergestellt wird. Diese Elektrodenschicht wird auf einer dem Träger abgewandten Seite zum Erweichen des Ionomermaterials aufgeheizt und unter Druck auf die Ionomermembran aufgewalzt. Durch den Walzvorgang kann es zu einer Schädigung der Ionomermembran und der Elektrodenschicht kommen.

In der WO 97/50142 wird ein kontinuierliches Verfahren zur Beschichtung einer Polymerelektrolyt-Membran mit Elektrodenschichten beschrieben, bei dem eine bandförmige Ionomermembran durch ein Bad mit Platinsalzlösung gezogen wird. Das anhaftende Salz wird anschließend in einem Gasstrom oder in einem weiteren Bad zum Edelmetall reduziert. Mit diesem Verfahren ist eine selektive Beschichtung, das heißt das Aufbringen der Elektrodenschichten auf die Membran in einem gewünschten Muster, nicht möglich. Außerdem können mit diesem Verfahren nur geringe Mengen an katalytisch aktivem Material auf die Membran aufgebracht werden.

In der WO 97/23916 wird ebenfalls ein Verfahren zur kontinuierlichen Herstellung von Materialverbunden beschrieben, wobei die Materialverbunde aus mehreren Funktionsmaterialien bestehen. Sie können zum Beispiel in Brennstoffzellen eingesetzt werden. Zur Herstellung der Katalysatorschichten können unter anderem fluide Zubereitungen, die katalytisches Material enthalten (Katalysatortinten), eingesetzt werden.

Weiterhin wird in der WO 97/23919 ein Verfahren zur Herstellung von Membran-Elektrodeneinheiten beschrieben, wobei das Verbinden der Polymerelektrolyt-Membran, der Elektrodenschichten und der Gasdiffüsionsschichten kontinuierlich in einem Walzverfahren durchgeführt wird.

In der EP 1 037295 wird ein kontinuierliches Verfahren zum selektiven Aufbringen von Elektrodenschichten auf eine bandförmige Ionomermembran beschrieben, bei dem Vorder- und Rückseite der Membran bedruckt werden. Die Membran muß dabei einen bestimmten Wassergehalt (unter 20%) aufweisen. Bedingt durch die Dimensionsänderungen der Membran während des Beschichtungsprozesses ist die Positioniergenauigkeit zwischen Vorder- und Rückseitendruck besonders bei dünnen Membranen (unter 50 µm Dicke) erschwert.

Die US 6,074,692 beschreibt ebenfalls ein kontinuierliches Verfahren zur Beschichtung einer Ionomermembran. Die Membran wird dabei in einem organischen Lösungsmittel vorgequollen, anschließend beschichtet und dann während des Trocknungsprozesses mit Klammem am Schrumpfen gehindert. Dieser Prozess ist mit Problemen behaftet, da das Vorquellen der Membran nicht präzise kontrolliert werden kann. Bedingt durch übermäßiges Quellen und dem damit verbundenen Ausdehnen der Membran wird eine exakte Positionierung bei den Folgedrucken nicht erreicht. Darüber hinaus kann die weiche, gummiartige Ionomermembran im gequollenen Zustand leicht durch den Zug der Klammem beschädigt werden.

Aufgabe der vorliegenden Erfindung war es daher, ein Verfahren anzugeben, mit dem Ionomermembranen kontinuierlich, beidseitig, mit hoher Positionsgenauigkeit und ohne Membranschädigung mit Katalysator beschichtet werden können. Weiterhin sollte diese katalysatorbeschichtete Membran (3-lagige CCM) durch Kombination mit zwei Gasverteilerschichten zu einer 5-lagigen Membran-Elektrodeneinheiten weiterverarbeitet werden können.

Diese Aufgabe wird durch das Verfahren gemäß Anspruch 1 gelöst. Vorteilhafte Varianten werden in den Unteransprüchen 2 bis 9 beschrieben. Die Ansprüche 10 bis 11 beziehen sich auf die Verwendung der gemäß dem Verfahren hergestellten, mit Katalysator beschichteten, Polymerelektrolytmembran für die Herstellung von Membran-Elektrodeneinheiten.

Das erfindungsgemäße Verfahren ist dadurch gekennzeichnet, daß
- eine Polymerelektrolyt-Membran eingesetzt wird, die auf der Rückseite mit einer Stützfolie versehen ist,
- die Vorderseite der Polymerelektrolytmembran mit einer ersten Elektrodenschicht unter Verwendung einer Katalysatortinte beschichtet und bei erhöhter Temperatur getrocknet,
- danach die Stützfolie von der Rückseite der Polymerelektrolytmembran entfernt,
- die Rückseite der Polymerelektrolytmembran mit einer zweiten Elektrodenschicht beschichtet und bei erhöhter Temperatur getrocknet
- und dann die beidseitig mit Katalysator beschichtete Polymerelektrolytmembran mit Wasser bei erhöhten Temperaturen nachbehandelt wird.

Erfindungsgemäß wird eine Ionomermembran verwendet, die auf der Rückseite mit einer polymeren Stützfolie ausgerüstet ist. In einer ersten Verfahrensstufe wird diese gestützte Membran auf der Vorderseite mit einer ersten Elektrodenschicht beschichtet. Nach der Trocknung dieser Elektrodenschicht wird die Polymerstützfolie entfernt und in einer zweiten Verfahrensstufe die Rückseite der Membran beschichtet. Nach der anschließenden Trocknung wird die katalysatorbeschichtete Membran im Wasserbad nachbehandelt, gewässert und gespült. Die Beschichtung der Vorder- und Rückseite kann durch verschiedene Verfahren erfolgen. Beispiele sind unter anderem Siebdruck, Schablonendruck, Rasterdruck, Rakeln, oder Sprühen. Zur Herstellung einer 5-lagigen Membran-Elektrodeneinheit werden dann auf beiden Seiten der 3-lagigen CCM zwei Gasverteilerschichten angebracht.

Mit dem Verfahren können bevorzugt Polymerelektrolytmembranen aus polymeren, perfluorierten Sulfonsäure-Verbindungen, dotierten Polybenzimidazolen, Polyetherketonen oder Polysulfonen in der Säureform oder in der Alkaliform verarbeitet werden. Als Stützfolie für die Rückseite der Polymerelektrolytmembran eignen sich polymere Folien aus Polyester, Polyethylen, Polypropylen, Polycarbonat, Polyimid oder aus vergleichbaren Polymermaterialien.

Es hat sich gezeigt, daß durch die Verwendung einer Ionomermembran, die durch eine Polymerfolie auf der Rückseite gestützt ist, die Ausdehnung der Membran in der Länge und Breite (x- und y- Richtung) in der ersten Beschichtungsstufe (insbesondere beim Kontakt mit dem Lösungsmittel der Tinte) reduziert wird. Vor allem bei größeren Druckformaten (d.h. CCMs mit aktiver Fläche größer 200 cm²) und dünnen lonomermembranen (unter 50 µm Dicke) kommt es nicht zu Auswölbungen und Faltenbildung.

Weiterhin hat sich überraschenderweise gezeigt, daß nach Entfernung der Stützfolie die Rückseite der bereits beschichteten Ionomermembran mit hoher Positionsgenauigkeit bedruckt werden kann, wenn der vorhergehende Trocknungsprozess so gestaltet wird, daß die einseitig beschichtete Ionomermembran möglichst wenig Lösungsmittelreste enthält. Erfindungsgemäß werden die Parameter für den Trocknungsprozeß so festgelegt, daß der Restlösungsmittelgehalt der beschichteten Membran vor der zweiten Beschichtungsstufe zwischen 0 und 5 Gew.-%, vorzugsweise zwischen 0 und 3 Gew.-% liegt. Bei höheren Restlösungsmittelgehalten kommt es auch beim zweiten Beschichtungsvorgang zu übermäßigen Auswölbungen und damit zur Faltenbildung. Der Restlösungsmittelgehalt wird durch Bestimmung des Gewichtsverlustes einer beschichteten Probe nach Trocknung bei 120 °C im Umlufttrockenschrank bestimmt.

Geeignete kontinuierliche Trocknungsverfahren sind unter anderem Heißlufttrocknung, Infrarot-Trocknung und/oder Kombinationen aus beiden Verfahren. Das Trocknungsprofil (Temperatur und Zeit) wird dabei so eingestellt, daß ein möglichst geringer Restlösungsmittelgehalt erreicht wird. Geeignete Temperaturen liegen zwischen 40 und 150°C, geeignete Trocknungszeiten bei 1 bis 30 Minuten.

Die mit dem Verfahren erzielbare Positioniergenauigkeit zwischen Vorder- und Rückseitendruck liegt im Bereich zwischen 0,05 bis 0,2 mm. Dadurch wird es möglich, die erste Elektrodenschicht auf der Vorderseite der Polymerelektrolytmembran in einem gewünschten Muster aufzubringen und die Beschichtung der Rückseite der Polymerelektrolytmembran mit der zweiten Elektrodenschicht mit einer Positioniergenauigkeit zwischen 0,05 und 0,2 mm relativ zu dem Muster der Vorderseite vorzunehmen.

Die Elektrodenschichten auf den beiden Seiten der Membran können voneinander verschieden sein. Sie können aus unterschiedlichen Katalysatortinten aufgebaut sein und unterschiedliche Katalysatoranteile und Edelmetallbeladungen (mg Pt/cm²) besitzen. In den Tinten können unterschiedliche Elektrokatalysatoren (edelmetallhaltige oder unedelmetallhaltige Trägerkatalysatoren sowie ungeträgerte Mohre) zum Einsatz kommen.

Die erste Beschichtungsstufe (unter Verwendung der mit Trägerfolie gestützten Membran) kann in einem einfachen oder mehrfachen Beschichtungsverfahren ausgeführt, werden, während der Rückseitendruck (nach Abnahme der Stützfolie) vorzugsweise in einem einstufigen Beschichtungsverfahren erfolgt. Es sind jedoch auch andere Verfahrenskombinationen möglich.

Die folgenden Beispiele sollen das erfindungsgemäße Verfahren weiter erläutern.

### Beispiel 1:

Für die Anfertigung einer Membran-Elektrodeneinheit gemäß dem erfindungsgemäßen Verfahren wurde eine Katalysatortinte mit folgender Zusammensetzung verwendet:

### Zusammensetzung der Katalysatortinte (Anode und Kathode):

| | |
|---|---|
| 15, 0 g | Pt-Trägerkatalysator (40 Gew.-% Pt auf Ruß, Fa. OMG) |
| 44,0 g | Nafion®-Lösung (11,4 Gew.-% in Wasser) |
| 41,0 g | Dipropylenglykol |
| 100,0 g | |

Der Katalysator wurde mit Hilfe eines Dispergiergerätes in der wässrigen Nafion-Lösung suspendiert.

Ein 30 cm breites und 100 m langes Band einer Polymerelektrolyt-Membran (Nafion® 112, Fa. DuPont; H⁺-Form, 50 µm Dicke), die auf einer Seite durch eine auflaminierte Folie aus Polyester gestützt ist, wurde in einer kontinuierlichen, von Rolle zu Rolle laufenden Beschichtungsanlage (Aufbau wie in EP 1 037295 beschrieben) zunächst auf der Vorderseite mit der Katalysatortinte im Siebdruckverfahren beschichtet. Die Fläche der Beschichtung beträgt 100 cm² (Format-Abmessungen 10 x 10 cm). Nach dem Druck wurde die beschichtete Membran in einem kontinuierlichen Banddurchlauftrockner mit Heißluft getrocknet. Es wurde mit einem langsam ansteigenden Trocknungsprofil und großem Heißluftvolumenstrom gearbeitet und das Profil so eingestellt, daß der Restlösungsmittelgehalt der beschichteten Membran nach der Trocknung 2,3 Gew.-% betrug. (Maximaltemperatur: 95 °C, Gesamttrocknungsdauer: 8 min). Nach der Trocknung wurde die Membran mit einem Aufwickler aufgerollt. Vor dem Rückseitendruck wurde die Membran abgewickelt und gewendet, wieder aufgewickelt und wiederum in die Beschichtungsanlage eingebracht. Vor der Rückseitenbeschichtung wurde die Stützfolie abgezogen und auf eine zweite Aufwickelrolle aufgerollt. Die Rückseitenbeschichtung der ungestützten Membran erfolgte mit der gleichen Katalysatortinte in einem Einfachdruck. Das Trocknungsprofil wurde auf eine Maximaltemperatur von 75 °C und eine Gesamttrocknungszeit von 5 min eingestellt.

Nach dem Bedrucken der Rückseite wurde die katalysatorbeschichtete Membran (CCM) in 80 °C warmem vollentsalzten Wasser (VE-Wasser) gewässert. Die CCM wies eine Gesamtplatinbeladung von 0,4 mg Pt/cm² auf (0,2 mg Pt/cm² auf jeder Seite).

Zur elektrochemischen Prüfung wurde aus der CCM eine aktive Fläche von 50 cm² herausgeschnitten und zu einer 5-lagigen Membran-Elektrodeneinheit (MEE) verarbeitet. Hierzu wurde auf beide Seiten der CCM hydrophobiertes Kohlefaserpapier (Typ Toray TGPH-060; Dicke 200µm) aufgelegt und der Verbund durch Heißpressen bei 130 °C und einem Druck von 70 bar hergestellt.

Die so hergestellte MEE wurde in eine entsprechende PEMFC-Einzelzelle eingebaut. Bei den Leistungstests wurde als Anodengas H₂, als Kathodengas Luft eingesetzt. Die Zelltemperatur betrug 80 °C. Die Anodenbefeuchtung wurde bei 80 °C und die Kathodenbefeuchtung bei 65 °C vorgenommen. Der Druck der Arbeitsgase betrug 1,5 bar (absolut). Die Stöchiometrie der Gase war 1,1 (Wasserstoff) und 1,5 (Kathodengas). Die gemessene Zellspannung betrug 670 mV bei einer Stromdichte von 600 mA/cm². Dies entspricht einer Leistung von etwa 0,4 W/cm².

### Beispiel 2:

Es wurde eine MEE zur Verwendung mit wasserstoffhaltigem Reformatgas hergestellt. Als Membran kam eine Ionomermembran mit 30 µm Dicke auf einer Stützfolie aus Polyester zum Einsatz. Das Druckformat betrug 15 x 15 cm (aktive Fläche 225 cm²).

### Zusammensetzung der Anodentinte:

| | |
|---|---|
| 15, 0 g | PtRu-Trägerkatalysator (40 Gew.-% PtRu auf Ruß: 26,4 Gew.-% Pt, |
| | 13,6 Gew.-% Ru; Katalysator entsprechend US 6,007,934) |
| 60,0 g | Nafion®-Lösung (10 Gew.-% in Wasser) |
| 15,0 g | Wasser (vollentsalzt) |
| 10,0 g | Propylenglykol |
| 100,0 g | |

Die 30 µm dicke Polymerelektrolyt-Membran wurde zunächst auf der Vorderseite in einem einfachen Druck mit der Anodentinte beschichtet. Der anschließende Trocknungsvorgang wurde so durchgeführt, daß der Restlösungsmittelgehalt der einseitig beschichteten Membran 1,2 Gew.-% betrug. Hierfür war ein Trocknungsprofil mit Maximaltemperaturen von 105 °C und einer Verweilzeit von 5 min in einem Heißluft-Durchlauftrockner notwendig. Nach dem Entfernen der Stützfolie wurde der Rückseitendruck einfach mit Hilfe der in Beispiel 1 genannten Katalysatortinte vorgenommen und wiederum, wie in Beispiel 1 angegebenen, getrocknet. Abschließend wurde die CCM in 80 °C heißem, vollentsalztem Wasser gespült. Die Edelmetallbeladung der katalysatorbeschichteten Membran betrug 0,4 mg PtRu/cm² auf der Anode sowie 0,3 mg Pt/cm² auf der Kathode.

Aus der CCM wurde ein Stück mit einer aktiven Fläche von 50 cm² herausgeschnitten. Zur Herstellung einer 5-lagigen MEE wurden zwei Gasverteilerschichten (bestehend aus hydrophobiertem Kohlefaserpapier Toray TGPH-060) auf der Vorder- und Rückseite der CCM angebracht und der Verbund durch Heißpressen bei 130 °C und einem Druck von 70 bar hergestellt.

Die so hergestellte MEE wurde in einem Brennstoffzellen-Prüfstand untersucht. Bei den Leistungstests wurde als Anodengas eine Reformat-Gasmischung von 45 Vol.-% H₂, 30 Vol.-% N₂, 23 Vol.-% CO₂, 50 ppm CO mit einem Airbleed von 2 Vol.-% Luft eingesetzt. Als Kathodengas wurde Luft verwendet. Die Zelltemperatur betrug 70 °C. Die Anodenbefeuchtung wurde bei 85 °C und die Kathodenbefeuchtung bei 55 °C vorgenommen. Der Druck der Arbeitsgase betrug 1 bar (absolut). Die Stöchiometrie der Gase war 1,1 (Anodengas) und 2,0 (Kathodengas). Bei einer Stromdichte von 600 mA/cm² betrug die Zellspannung 620 mV (Leistungsdichte von 0,37 W/cm²).

### Beispiel 3:

Es wurde eine MEE zur Verwendung in einer Direktmethanolbrennstoffzelle (DMFC) hergestellt.

Als Membran kam eine Ionomermembran mit 87,5 µm Dicke zum Einsatz, die auf eine Stützfolie aus Polyesterfilm auflaminiert wurde. Das Druckformat betrug 5 x 5 cm (aktive Fläche 25 cm²). Die Polymerelektrolyt-Membran wurde zunächst auf der Vorderseite in einem Schablonendruckverfahren (Schablonendicke 100 µm) mit einer Anodentinte beschichtet, die vergleichbar der in Beispiel 2 beschriebenen Anodentinte war. Anstatt eines 40 Gew.-% PtRu-Trägerkatalysators wurde jedoch ein 60 Gew.-% PtRu-Trägerkatalysator eingesetzt. Der abschließende Trocknungsvorgang wurde so durchgeführt, daß der Restlösungsmittelgehalt der einseitig beschichteten Membran 3,2 Gew.-% betrug. Hierfür war ein Trocknungsprofil mit Maximaltemperaturen von 105 °C und einer Verweilzeit im Trockner von 7 min notwendig. Nach dem Entfemen der Stützfolie wurde der Rückseitendruck ebenfalls mittels Schablonendruck mit Hilfe der in Beispiel 1 genannten Katalysatortinte vorgenommen und getrocknet. Abschließend wurde die so hergestellte CCM in 80 °C heißem vollentsalztem (VE) Wasser gewässert. Die Edelmetallbeladung der katalysatorbeschichteten Membran betrug 1 mg PtRu/cm² auf der Anode sowie 0,6 mg Pt/cm² auf der Kathode.

Zur Herstellung einer 5-lagigen MEE wurden zwei Gasverteilerschichten (bestehend aus hydrophobiertem Kohlefaserpapier) auf Vorder- und Rückseite der CCM angebracht und der Verbund durch Heißpressen bei 140°C und einem Druck von 60 bar hergestellt. Die so hergestellte MEE wurde in einem DMFC-Brennstoffzellen-Prüfstand untersucht. Die aktive Zellenfläche betrug 25 cm². Bei den Leistungstests wurde eine 2-molare Methanol-Lösung in Wasser verwendet, der Methanolfluß betrug 4 ml/min, die Zelltemperatur betrug 60 °C. Als Kathodengas wurde Luft eingesetzt. Für diese Zelle wurde eine maximale Leistungsdichte von 65 mW/cm² gemessen.

## Patentansprüche

1. Verfahren zur Herstellung einer beidseitig mit Katalysator beschichteten 3-lagigen Polymerelektrolytmemoran für Brennstoffzellen, wobei
• eine Polymerelektrolytmembran eingesetzt wird, die auf der Rückseite mit einer Stützfolie versehen ist,
• die Vorderseite der Polymerelektrolytmembran mit einer ersten Elektrodenschicht unter Verwendung einer Katalysatortinte beschichtet und bei erhöhter Temperatur getrocknet,
• danach die Stützfolie von der Rückseite der Polymerelektrolytmembran entfernt,
• nach Entfernung der Stützfolie die Rückseite der Polymerelektrolytmembran mit einer zweiten Elektrodenschicht beschichtet und bei erhöhter Temperatur getrocknet
• und dann die beidseitig mit Katalysator beschichtete Polymerelektrolytmembran mit Wasser bei erhöhten Temperaturen nachbehandelt wird.

2. Verfahren nach Anspruch 1, wobei
die Trocknung der ersten Elektrodenschicht auf der Vorderseite der gestützen Polymerelektrolytmembran so vorgenommen wird, daß der restliche Lösungsmittelgehalt des Gebildes nach Trocknung weniger als 5 Gew.-% beträgt.

3. Verfahren nach Anspruch 2, wobei die Trocknung der ersten Elektrodenschicht auf der Vorderseite der gestützten Polymerelektrolytmembran so vorgenommen wird, dass der restliche Lösungsmittelgehalt des Gebildes nach Trocknung weniger als 3 Gew.-% beträgt.

4. Verfahren nach einem der Ansprüche 1 bis 3, wobei
als Beschichtungsverfahren Siebdruck, Offset-Druck, Schablonendruck, Rasterdruck, Rakeln oder Sprühen verwendet werden.

5. Verfahren nach einem der Ansprüche 1 bis 4, wobei
die Polymerelektrolytmembran aus polymeren, perfluorierten Sulfonsäure-Verbindungen, dotierten Polybenzimidazolen, Polyetherketonen oder Polysulfonen besteht und in der Säureform oder in der Alkaliform vorliegt.

6. Verfahren nach einem der Ansprüche 1 bis 5, wobei
die Stützfolie auf der Rückseite der Polymerelektrolytmembran aus Polyester, Polyethylen, Polypropylen, Polycarbonat, Polyimid oder vergleichbaren Polymermaterialien besteht.

7. Verfahren nach Anspruch 6, wobei die Stützfolie auf der Rückseite der Polymerelektrolytmembran aus Polyester besteht.

8. Verfahren nach einem der Ansprüche 1 bis 7, wobei die Polymerelektrolytmembran kontinuierlich beschichtet wird.

9. Verfahren nach einem der Ansprüche 1 bis 8, wobei
die Trocknung der Elektrodenschichten im kontinuierlichen Verfahren mit Hilfe von Heißluft, Infrarot, Mikrowelle, Plasma oder mit Kombinationen davon erfolgt.

10. Verfahren nach Anspruch 9, wobei
die Trocknungstemperatur zwischen 40 und 150°C und die Trocknungsdauer zwischen 1 und 30 Minuten liegt.

11. Verfahren nach einem der Ansprüche 1 bis 10, wobei
die Nachbehandlung der beschichteten Polymerelektrolytmembran in vollentsalztem Wasser bei einer Temperatur zwischen 20 und 90 °C vorgenommen wird.

12. Verfahren nach einem der Ansprüche 1 bis 11, wobei
die erste Elektrodenschicht auf die Vorderseite der Polymerelektrolytmembran in einem gewünschten Muster aufgebracht und die Beschichtung der Rückseite der Polymerelektrolytmembran mit der zweiten Elektrodenschicht unter Einhaltung einer genauen Positionierung relativ zu dem Muster der Vorderseite vorgenommen wird.

13. Verfahren nach Anspruch 12, wobei die Beschichtung der Rückseite der Polymerelektrolytmembran mit der zweiten Elektrodenschicht unter Einhaltung einer Positioniergenauigkeit zwischen 0,05 und 0,2 mm relativ zu dem Muster der Vorderseite vorgenommen wird.

14. Verwendung der nach einem der vorstehende Ansprüche hergestellten katalysatorbeschichteten Polymerelektrolytmembran zur Herstellung von Membran-Elektrodeneinheiten, wobei
die katalysatorbeschichtete Polymerelektrolytmembran auf Vorder- und Rückseite mit Gasverteilerschichten versehen und dann mit diesen unter geeigneten Druck- und Temperaturbedingungen verbunden wird.

15. Verwendung nach Anspruch 14, wobei
der Verbund der katalysatorbeschichteten Polymerelektrolytmembran mit den beiden Gasverteilerschichten bei Drückern von 10 bis 100 bar und Temperaturen von 50 bis 150 °C hergestellt wird.

16. Verwendung der nach einem der Ansprüche 1 bis 13 hergestellten katalysatorbeschichteten Polymerelektrolytmembranen in PEM-Brennstoffzellen und Direktmethanolbrennstoffzellen (DMFC).

## Claims

1. A process for producing a 3-layer polymer electrolyte membrane for fuel cells which is coated with catalyst on both sides, wherein
• polymer electrolyte membrane with a supporting film on the back side is provided,
• the front side of the polymer electrolyte membrane is coated with a first electrode • layer using a catalyst ink and is dried at an elevated temperature,
• the supporting film is subsequently removed from the back side of the polymer electrolyte membrane,
• after removal of the supporting film, the back side of the polymer electrolyte membrane is coated with a second electrode layer and is dried at an elevated temperature
• and then the polymer electrolyte membrane, which is coated on both sides with catalyst, is after treated with water at elevated temperatures.

2. A process according to claim 1, wherein drying the first electrode layer on the front side of the supported polymer electrolyte membrane is carried out so that the residual solvent content of the assembly is less than 5% by weight after drying.

3. A process according to claim 2, wherein drying the first electrode layer on the front side of the supported polymer electrolyte membrane is carried out so that the residual solvent content of the assembly is less than 3% by weight after drying.

4. A process according to one of claims 1 to 3, wherein screen printing, offset printing, stencil printing, halftone printing, knife coating or spraying are used as processes for coating.

5. A process according to one of claims 1 to 4, wherein the polymer electrolyte membrane consists of polymeric perfluorinated sulfonic acid compounds, doped polybenzimidazols, polyether ketones or polysulfones, and is present in the acid or alkali form.

6. A process according to one of claims 1 to 5, wherein the supporting film on the back side of the polymer electrolyte membrane consists of polyester, polyethylene, polypropylene, polycarbonate, polyimide or similar polymeric materials.

7. A process according to claim 6, wherein the supporting film on the back side of the polymer electrolyte membrane consists of polyester.

8. A process according to one of claims 1 to 7, wherein the polymer electrolyte membrane is coated in a continuous process.

9. A process according to one of claims 1 to 8, wherein drying the electrode layers is carried out in a continuous process using hot air, infrared, microwaves, plasma, or combinations thereof.

10. A process according to claim 9, wherein the drying temperature is between 40 and 150 °C and the drying time is between 1 and 30 minutes.

11. A process according to one of claims 1 to 10, wherein the after treatment of the coated polymer electrolyte membrane is done in completely deionized water at a temperature between 20 and 90 °C.

12. A process according to one of claims 1 to 11, wherein the first electrode layer is applied in a desired pattern to the front side of the polymer electrolyte membrane and the back side of the polymer electrolyte membrane is coated with the second electrode layer while maintaining accurate positioning relative to the pattern on the front side.

13. A process according to claim 12, wherein the back side of the polymer electrolyte membrane is coated with the second electrode layer while maintaining an accuracy of positioning between 0.05 and 0.2 mm relative to the pattern on the front side.

14. Use of the catalyst-coated polymer electrolyte membrane produced according to one of the previous claims for producing membrane electrode assemblies, wherein the front and back sides of the catalyst-coated polymer electrolyte membrane is provided with gas distribution layers and is then bonded to these under suitable pressure and temperature conditions.

15. Use according to claim 14, wherein the composite of the catalyst-coated polymer electrolyte membrane with the two gas distribution layers is produced at pressures of 10 to 100 bar and at temperatures of 50 to 150 °C.

16. Use of the catalyst-coated polymer electrolyte membrane produced according to one of claims 1 to 13 in PEM fuel cells and direct methanol fuel cells (DMFC).

## Revendications

1. Procédé de fabrication d'une membrane électrolytique polymère à trois couches revêtue de part et d'autre d'un catalyseur pour des piles à combustible selon lequel,
- on utilise une membrane électrolytique polymère dont le dos est muni d'un film de support,
- on recouvre la face avant de la membrane électrolytique polymère d'une première couche d'électrode en utilisant un revêtement de catalyseur et on sèche à température élevée,
- puis, on enlève le film de support du dos de la membrane électrolytique polymère,
- après enlèvement du film de support, on recouvre le dos de la membrane électrolytique polymère d'une seconde couche d'électrode et on sèche à température élevée, et
- ensuite on effectue un post-traitement de la membrane électrolytique polymère dont les deux faces sont revêtues d'un catalyseur, avec de l'eau à des températures élevées.

2. Procédé selon la revendication 1,
selon lequel
on effectue le séchage de la première couche d'électrode sur la face avant de la membrane électrolytique polymère, munie d'un support de sorte que la teneur résiduelle en solvant de la structure après séchage, soit de moins de 5 % en poids.

3. Procédé selon la revendication 2,
selon lequel
on effectue le séchage de la première couche d'électrode sur la face avant de la membrane électrolytique polymère munie d'un support, de façon que la teneur résiduelle en solvant de la structure après séchage, soit de moins de 3 % en poids.

4. Procédé selon l'une des revendications 1 à 3,
selon lequel
comme procédé de revêtement, on utilise la sérigraphie, l'impression offset, l'impression au pochoir, l'impression tramée, l'impression avec des racles ou la pulvérisation.

5. Procédé selon l'une des revendications 1 à 4,
selon lequel
la membrane électrolytique polymère se compose de polymères, de composés perfluorés d'acide sulfonique, de polybenzimidazoles dotés, de polyéther cétones ou de polysulfones et se présente à l'état acide ou à l'état alcalin.

6. Procédé selon l'une des revendications 1 à 5,
dans lequel
le film de support appliqué au dos de la membrane électrolytique polymère, est en polyester, polyéthylène, polypropylène, polycarbonate, polyimide ou en des polymères comparables.

7. Procédé selon la revendication 6,
selon lequel
le film de support appliqué au dos de la membrane électrolytique polymère, est en polyester.

8. Procédé selon l'une des revendications 1 à 7,
selon lequel
la membrane électrolytique polymère, est revêtue en continu.

9. Procédé selon l'une des revendications 1 à 8,
selon lequel
le séchage des couches d'électrode se fait en continu avec de l'air chaud, un rayonnement infrarouge, des micro-ondes, du plasma ou des combinaisons de tels moyens.

10. Procédé selon la revendication 9,
selon lequel
la température de séchage est comprise entre 40 et 150°C et la durée du séchage est comprise entre 1 et 30 minutes.

11. Procédé selon l'une des revendications 1 à 10,
selon lequel
le post-traitement de la membrane électrolytique polymère munie du revêtement, se fait dans de l'eau totalement désalinisée à une température comprise entre 20 et 90°C.

12. Procédé selon l'une des revendications 1 à 11,
selon lequel
la première couche d'électrode est appliquée sur la face avant de la membrane électrolytique polymère suivant le motif souhaité et le revêtement du dos de la membrane électrolytique polymère avec la seconde couche d'électrode se fait en respectant un positionnement précis par rapport au motif de la face avant.

13. Procédé selon la revendication 12,
selon lequel
le revêtement du dos de la membrane électrolytique polymère avec la seconde couche d'électrode, se fait en respectant une précision de positionnement comprise entre 0,05 et 0,2 mm par rapport au motif de la face avant.

14. Utilisation de la membrane électrolytique polymère munie d'un revêtement catalytique réalisé selon l'une des revendications précédentes pour la fabrication d'unités membrane/électrodes,
selon lequel
on munit la membrane électrolytique polymère revêtue de catalyseur sur sa face avant et sur sa face arrière de couches de distribution de gaz et ensuite on la relie à ces couches dans des conditions de pression et de température appropriées.

15. Utilisation selon la revendication 14,
selon laquelle
la liaison de la membrane électrolytique polymère revêtue de catalyseur avec les deux couches de distribution de gaz, se fait à des pressions de 10 à 100 bars et à des températures comprises de 50 à 150°C.

16. Utilisation de membrane électrolytique polymère revêtue de catalyseur réalisée selon l'une des revendications 1 à 13 dans des piles à combustible PEM et des piles à combustible à combustion directe de méthanol (DMFC).
